# EUROPÄISCHE PATENTSCHRIFT

(11) **EP 2 819 818 B1**
(45) Veröffentlichungstag und Bekanntmachung des Hinweises auf die Patenterteilung: **27.05.2020**
(21) Anmeldenummer: 13700366.1
(22) Anmeldetag: 04.01.2013
(51) Int. Cl.: B27B 33/14, B27B 17/08

(54) **WERKZEUGMASCHINENTRENNVORRICHTUNG**
MACHINE TOOL SEPARATING DEVICE
DISPOSITIF DE SÉPARATION POUR MACHINE-OUTIL

(30) Priorität: 02.03.2012 DE 102012004053
(43) Veröffentlichungstag der Anmeldung: 07.01.2015
(73) Patentinhaber: Robert Bosch GmbH, 70442 Stuttgart (DE)
(72) Erfinder: ENGELFRIED, Uwe, 73760 Ostfildern (DE); GRULICH, Petr, 73230 Kirchheim (DE)
(86) Internationale Anmeldenummer: PCT/EP2013/050108
(87) Internationale Veröffentlichungsnummer: WO 2013/127544

(56) Entgegenhaltungen:
- DE-A1- 2 358 559
- DE-A1- 3 640 857
- DE-C- 706 560
- DE-U1- 7 628 843
- FR-A1- 2 256 796
- US-A- 3 228 437
- US-A- 5 772 957

## Beschreibung

### Stand der Technik

Es sind bereits Werkzeugmaschinentrennvorrichtungen, insbesondere Handwerkzeugmaschinentrennvorrichtungen, bekannt, die einen Schneidstrang aufweisen, der zumindest ein Schneidenträgerelement umfasst. Ein derartiger Schneidstrang, mit dem Merkmalen des Oberbegriffs des Anspruchs 1, wird durch das Dokument FR2256796A offenbart.

### Offenbarung der Erfindung

Die Erfindung betrifft eine Maschinentrennvorrichtung mit den Merkmalen des Anspruchs 1. Es wird vorgeschlagen, dass das Schneidenträgerelement zumindest ein Quersicherungselement aufweist, das dazu vorgesehen ist, das Schneidenträgerelement in einem montierten Zustand weitestgehend gegen eine Querbewegung relativ zu einem weiteren Schneidenträgerelement des Schneidstrangs zu sichern. Das Quersicherungselement ist bevorzugt durch Zugumformen an das Schneidenträgerelement angeformt. Es ist jedoch auch denkbar, dass der Quersicherungsbereich mittels einer anderen, einem Fachmann als sinnvoll erscheinenden Verbindungsart an dem Schneidenträgerelement angeordnet ist, wie beispielsweise mittels eins Schweißverfahrens usw. Besonders bevorzugt weist das Schneidenträgerelement zumindest ein geprägtes Quersicherungselement auf. Vorzugsweise ist das Schneidenträgerelement in einem montierten Zustand mit dem weiteren Schneidenträgerelement gekoppelt, insbesondere formschlüssig verbunden. Unter einem "Schneidstrang" soll hier insbesondere eine Einheit verstanden werden, die dazu vorgesehen ist, einen atomaren Zusammenhalt eines zu bearbeitenden Werkstücks örtlich aufzuheben, insbesondere mittels eines mechanischen Abtrennens und/oder mittels eines mechanischen Abtragens von Werkstoffteilchen des Werkstücks. Bevorzugt ist der Schneidstrang dazu vorgesehen, das Werkstück in zumindest zwei physikalisch voneinander getrennte Teile zu separieren und/oder zumindest teilweise Werkstoffteilchen des Werkstücks ausgehend von einer Oberfläche des Werkstücks abzutrennen und/oder abzutragen. Besonders bevorzugt wird der Schneidstrang in zumindest einem Betriebszustand umlaufend bewegt, insbesondere entlang einer Umfangsrichtung einer Führungseinheit der Werkzeugmaschinentrennvorrichtung. Unter einem "Schneidenträgerelement" soll hier insbesondere ein Element verstanden werden, an dem zumindest ein Schneidelement zum Abtrennen und/oder zum Abtragen von Werkstoffteilchen eines zu bearbeitenden Werkstücks angeordnet ist.

Unter einem "Quersicherungselement" soll hier insbesondere ein Element verstanden werden, das infolge eines Formschlusses und/oder infolge eines Kraftschlusses eine Bewegung entlang einer Querachse, die zumindest im Wesentlichen senkrecht zu einer Schneidebene des Schneidstrangs verläuft, zu sichern. Bevorzugt ist das Quersicherungselement differierend zu einem Nietkopf oder einem Schraubenkopf ausgebildet. Vorzugsweise ist das Quersicherungselement dazu vorgesehen, eine Querbewegung mittels eines Formschlusses zu sichern bzw. zu begrenzen. Es ist jedoch auch denkbar, dass das Quersicherungselement dazu vorgesehen ist, eine Querbewegung mittels einer anderen, einem Fachmann als sinnvoll erscheinenden Art und Weise zumindest zu sichern bzw. zu begrenzen, wie beispielsweise mittels einer magnetischen Kraft usw. Der Ausdruck "in einem montierten Zustand des Schneidenträgerelements weitestgehend gegen eine Querbewegung relativ zu einem weiteren Schneidenträgerelement des Schneidstrangs zu sichern" soll hier insbesondere eine Begrenzung einer Bewegung der miteinander mittels zumindest eines Verbindungselements verbundenen Schneidenträgerelemente relativ zueinander mittels des Quersicherungselements entlang einer zumindest im Wesentlichen senkrecht zu einer Schneidebene des Schneidstrangs verlaufenden Bewegungsstrecke definieren. Die Bewegungsstrecke der Schneidenträgerelemente relativ zueinander wird hierbei insbesondere mittels des Quersicherungselements auf einen Wert kleiner als 5 mm, bevorzugt kleiner als 2 mm und besonders bevorzugt kleiner als 1 mm begrenzt.

Der Begriff "Verbindungselement" soll hier insbesondere ein Element definieren, das dazu vorgesehen ist, zumindest zwei Bauteile formschlüssig und/oder kraftschlüssig miteinander zu verbinden, insbesondere beweglich miteinander zu verbinden, um eine Antriebskraft und/oder ein Antriebsmoment zu übertragen. In diesem Zusammenhang soll unter "vorgesehen" insbesondere speziell ausgelegt und/oder speziell ausgestattet verstanden werden. Mittels der erfindungsgemäßen Ausgestaltung kann vorteilhaft eine kompakte Werkzeugmaschinentrennvorrichtung erreicht werden. Unter "einstückig" soll hier zumindest stoffschlüssig verbunden verstanden werden, beispielsweise durch einen Schweißprozess, einen Klebeprozess, einen Anspritzprozess und/oder einen anderen, einem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Das Schneidenträgerelement weist besonders bevorzugt ein Verbindungselement und eine Verbindungsausnehmung zur Aufnahme eines Verbindungselements des mit dem Schneidenträgerelement verbindbaren weiteren Schneidenträgerelements auf. In einer alternativen Ausgestaltung der erfindungsgemäßen Werkzeugmaschinentrennvorrichtung ist das Verbindungselement als ein von den Schneidenträgerelementen getrennt ausgebildetes Bauteil ausgebildet. Hierbei weisen die Schneidenträgerelemente bevorzugt jeweils zwei Verbindungsausnehmungen auf, in die jeweils ein Verbindungselement einführbar ist, wobei das Verbindungselement nach einem Einführen mittels eines Umformprozesses, wie beispielsweise eines Prägeprozesses, oder mittels eines Stoffschlussprozesses an dem Schneidenträgerelement und dem weiteren Schneidenträgerelement fixiert wird. Mittels der einstückigen Ausgestaltung des Verbindungselements kann vorteilhaft ein Montageaufwand gering gehalten werden.

Der Begriff "Schneidebene" soll hier insbesondere eine Ebene definieren, in der der Schneidstrang in zumindest einem Betriebszustand entlang eines Umfangs der Führungseinheit in zumindest zwei zueinander entgegengesetzt gerichtete Schneidrichtungen relativ zur Führungseinheit bewegt wird. Bevorzugt ist die Schneidebene bei einer Bearbeitung eines Werkstücks zumindest im Wesentlichen quer zu einer zu bearbeitenden Werkstückoberfläche ausgerichtet. Unter "zumindest im Wesentlichen quer" soll hier insbesondere eine Ausrichtung einer Ebene und/oder einer Richtung relativ zu einer weiteren Ebene und/oder einer weiteren Richtung verstanden werden, die bevorzugt von einer parallelen Ausrichtung der Ebene und/oder der Richtung relativ zu der weiteren Ebene und/oder der weiteren Richtung abweicht. Es ist jedoch auch denkbar, dass die Schneidebene bei einer Bearbeitung eines Werkstücks zumindest im Wesentlichen parallel zu einer zu bearbeitenden Werkstückoberfläche ausgerichtet ist, insbesondere bei einer Ausbildung des Schneidstrangs als Schleifmittel usw. Unter "zumindest im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist.

Unter einer "Schneidrichtung" soll hier insbesondere eine Richtung verstanden werden, entlang deren der Schneidstrang zur Erzeugung eines Schneidspalts und/oder zur Abtrennung und/oder zur Abtragung von Werkstoffteilchen eines zu bearbeitenden Werkstücks in zumindest einem Betriebszustand infolge einer Antriebskraft und/oder eines Antriebsmoments, insbesondere in der Führungseinheit, bewegt wird. Bevorzugt wird der Schneidstrang in einem Betriebszustand entlang der Schneidrichtung relativ zur Führungseinheit bewegt. Der Schneidstrang und die Führungseinheit bilden vorzugsweise zusammen ein geschlossenes System. Der Begriff "geschlossenes System" soll hier insbesondere ein System definieren, das zumindest zwei Komponenten umfasst, die mittels eines Zusammenwirkens in einem demontierten Zustand des Systems von einem dem System übergeordneten System, wie beispielsweise einer Werkzeugmaschine, eine Funktionalität beibehalten und/oder die im demontierten Zustand unverlierbar miteinander verbunden sind. Bevorzugt sind die zumindest zwei Komponenten des geschlossenen Systems für einen Bediener zumindest im Wesentlichen unlösbar miteinander verbunden. Unter "zumindest im Wesentlichen unlösbar" soll hier insbesondere eine Verbindung von zumindest zwei Bauteilen verstanden werden, die lediglich unter der Zuhilfenahme von Trennwerkzeugen, wie beispielsweise einer Säge, insbesondere einer mechanischen Säge usw., und/oder chemischen Trennmitteln, wie beispielsweise Lösungsmitteln usw., voneinander trennbar sind. Mittels der erfindungsgemäßen Ausgestaltung kann vorteilhaft während eines Betriebs, insbesondere während eines Einbringens eines Schnitts usw., eine seitliche Versetzung des Schneidenträgerelements relativ zum weiteren Schneidenträgerelement zumindest weitestgehend verhindert werden. Somit kann vorteilhaft ein präzises Arbeitsergebnis erzielt werden.

Des Weiteren wird vorgeschlagen, dass das Quersicherungselement am Verbindungselement angeordnet ist. Hierbei wird das Quersicherungselement besonders bevorzugt nach einer Kopplung des Schneidenträgerelements mit dem weiteren Schneidenträgerelement durch einen Umformprozess an das Verbindungselement angeformt. Vorzugsweise weisen das Schneidenträgerelement und das weitere Schneidenträgerelement nach einer Kopplung und nach einer Anformung des Quersicherungselements zumindest eine Spielpassung auf. Bevorzugt wird mittels der Spielpassung und mittels eines Zusammenwirkens des Verbindungselements des Schneidenträgerelements und einer Verbindungsausnehmung des weiteren Schneidenträgerelements eine drehbare Lagerung realisiert. Mittels der erfindungsgemäßen Ausgestaltung kann vorteilhaft eine zuverlässige Sicherung des Schneidenträgerelements gegen eine Versetzung relativ zum weiteren Schneidenträgerelement während einer Bearbeitung eines Werkstücks mittels der Werkzeugmaschinentrennvorrichtung realisiert werden.

Das Verbindungselement ist bolzenförmig ausgebildet. Hierbei weist das Verbindungselement, betrachtet in einer zumindest im Wesentlichen parallel zur Schneidebene verlaufenden Ebene, einen kreisförmigen Querschnitt auf. Das Verbindungselement ist zylinderförmig ausgebildet.

Ferner wird vorgeschlagen, dass das Quersicherungselement zumindest einen Sicherungsbereich aufweist, der sich zumindest im Wesentlichen parallel zu einer Schneidebene des Schneidstrangs erstreckt. Bevorzugt weist der Sicherungsbereich eine kreisringförmige bzw. eine kreisförmige Ausgestaltung auf. Es ist jedoch auch denkbar, dass der Sicherungsbereich eine andere, einem Fachmann als sinnvoll erscheinende Ausgestaltung aufweist, wie beispielsweise eine Ausgestaltung als Kreisringsektor oder als partieller Fortsatz usw. Besonders bevorzugt wird der Sicherungsbereich infolge eines Umformverfahrens direkt an das Verbindungselement nach einer Montage des Schneidenträgerelements und des weiteren Schneidenträgerelements angeformt. Mittels der erfindungsgemäßen Ausgestaltung der Werkzeugmaschinentrennvorrichtung kann konstruktiv einfach eine Führung des Schneidstrangs erreicht werden. Zudem kann mittels der erfindungsgemäßen Ausgestaltung konstruktiv einfach eine Sicherung des Schneidenträgerelements realisiert werden. Zudem kann vorteilhaft eine ungewollte Demontage des Schneidenträgerelements und des weiteren Schneidenträgerelements nach einem Anformen des Quersicherungselements Sicherungsbereich vorteilhaft verhindert werden.

Zudem wird vorgeschlagen, dass das Schneidenträgerelement zumindest ein Segmentführungselement aufweist, das dazu vorgesehen ist, eine Bewegung des Schneidenträgerelements, in einem in einer Führungseinheit angeordneten Zustand in einer von der Führungseinheit abgewandten Richtung betrachtet, zumindest entlang einer zumindest im Wesentlichen parallel zu einer Schneidebene des Schneidstrangs verlaufenden Richtung zu begrenzen. Besonders bevorzugt weist jedes Schneidenträgerelement des Schneidstrangs der Werkzeugmaschinentrennvorrichtung zumindest ein Segmentführungselement auf, das dazu vorgesehen ist, eine Bewegung des jeweiligen Schneidenträgerelements, in einem in einer Führungseinheit angeordneten Zustand in einer von der Führungseinheit abgewandten Richtung betrachtet, zumindest entlang einer zumindest im Wesentlichen parallel zu einer Schneidebene des Schneidstrangs verlaufenden Richtung zu begrenzen. Vorzugsweise weist die Werkzeugmaschinentrennvorrichtung zumindest eine Führungseinheit zur Aufnahme des Schneidstrangs auf, die zumindest ein mit dem Segmentführungselement korrespondierendes Segmentgegenführungselement umfasst. Unter einer "Führungseinheit" soll hier insbesondere eine Einheit verstanden werden, die dazu vorgesehen ist, eine Zwangskraft zumindest entlang einer Richtung senkrecht zu einer Schneidrichtung des Schneidstrangs auf den Schneidstrang auszuüben, um eine Bewegungsmöglichkeit des Schneidstrangs entlang der Schneidrichtung vorzugeben. Bevorzugt weist die Führungseinheit zumindest ein Führungselement auf, insbesondere eine Führungsnut, durch das der Schneidstrang geführt wird. Bevorzugt ist der Schneidstrang, in der Schneidebene betrachtet, entlang eines gesamten Umfangs der Führungseinheit durch die Führungseinheit mittels des Führungselements, insbesondere der Führungsnut, geführt. Somit kann konstruktiv einfach eine Führung entlang einer zumindest im Wesentlichen parallel zu einer Schneidebene des Schneidstrangs verlaufenden Richtung des Schneidstrangs erreicht werden.

Ferner betrifft die Erfindung ein Verfahren zu einer Herstellung zumindest eines Schneidenträgerelements des Schneidstrangs der erfindungsgemäßen Werkzeugmaschinentrennvorrichtung mit den Merkmalen des Anspruchs 4. Hierbei wird das Schneidenträgerelement in einem ersten Schritt des Verfahrens mittels einer Stanzvorrichtung aus einem Bandmaterial gestanzt. Das Verbindungselement und weitere Funktionsbereiche des Schneidenträgerelements werden mittels eines Zusammenwirkens einer Matrize und eines Stempels während des Stanzprozesses an das Schneidenträgerelement angeformt. Mittels der erfindungsgemäßen Herstellung des Verfahrens kann vorteilhaft eine kostengünstige Produktion erreicht werden.

Das Quersicherungselement wird nach einer Kopplung von zumindest dem Schneidenträgerelement mit dem weiteren Schneidenträgerelement des Schneidstrangs mittels einer Prägevorrichtung an ein Verbindungselement des Schneidstrangs geprägt. Es kann vorteilhaft eine zuverlässige Sicherung des Schneidenträgerelements am weiteren Schneidenträgerelement erreicht werden.

Des Weiteren betrifft die Erfindung eine tragbaren Werkzeugmaschine mit einer erfindungsgemäßen Werkzeugmaschinentrennvorrichtung mit einer Kopplungsvorrichtung zur formschlüssigen und/oder kraftschlüssigen Kopplung mit der erfindungsgemäßen Werkzeugmaschinentrennvorrichtung. Unter einer "tragbaren Werkzeugmaschine" soll hier insbesondere eine Werkzeugmaschine, insbesondere eine Handwerkzeugmaschine, verstanden werden, die von einem Bediener transportmaschinenlos transportiert werden kann. Die tragbare Werkzeugmaschine weist insbesondere eine Masse auf, die kleiner ist als 40 kg, bevorzugt kleiner als 10 kg und besonders bevorzugt kleiner als 5 kg. Besonders bevorzugt bilden die erfindungsgemäße Werkzeugmaschinentrennvorrichtung und die erfindungsgemäße tragbare Werkzeugmaschine ein Werkzeugmaschinensystem. Es kann vorteilhaft eine tragbare Werkzeugmaschine erreicht werden, die besonders vorteilhaft für ein breites Einsatzspektrum geeignet ist.

Weitere Vorteile ergeben sich aus der folgenden Zeichnungsbeschreibung. In der Zeichnung ist ein Ausführungsbeispiel der Erfindung dargestellt.

Es zeigen:
- Fig. 1: eine erfindungsgemäße tragbare Werkzeugmaschine mit einer erfindungsgemäßen Werkzeugmaschinentrennvorrichtung in einer schematischen Darstellung,
- Fig. 2: eine Detailansicht der erfindungsgemäßen Werkzeugmaschinentrennvorrichtung in einer schematischen Darstellung,
- Fig. 3: eine Detailansicht von Schneidenträgerelementen eines Schneidstrangs der erfindungsgemäßen Werkzeugmaschinentrennvorrichtung in einer schematischen Darstellung und
- Fig. 4: eine Schnittansicht der Schneidenträgerelemente entlang der Linie IV-IV aus Figur 3 in einer schematischen Darstellung.

### Beschreibung des Ausführungsbeispiels

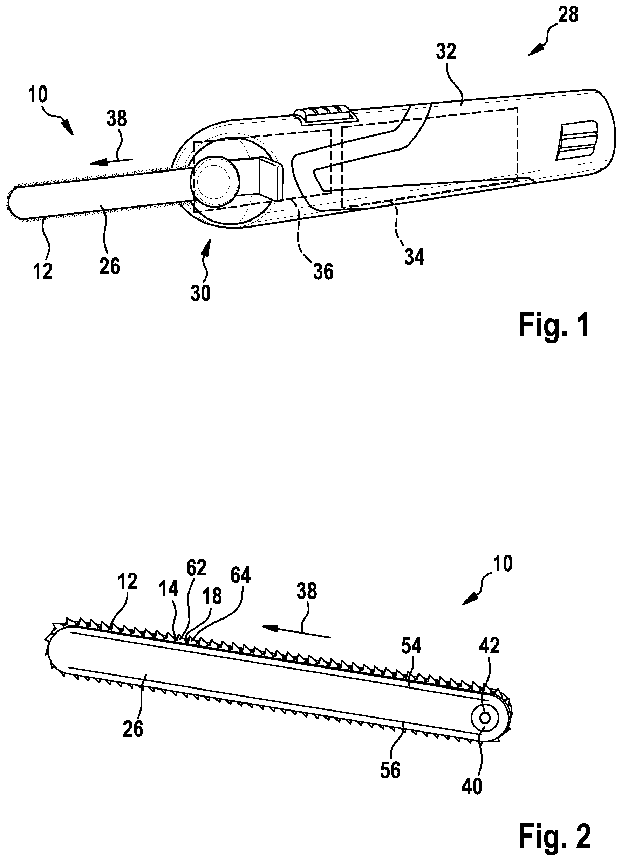

Figur 1 zeigt eine tragbare Werkzeugmaschine 28 mit einer Werkzeugmaschinentrennvorrichtung 10, die zusammen ein Werkzeugmaschinensystem bilden. Die tragbare Werkzeugmaschine 28 weist eine Kopplungsvorrichtung 30 zur formschlüssigen und/oder kraftschlüssigen Kopplung mit der Werkzeugmaschinentrennvorrichtung 10 auf. Die Kopplungsvorrichtung 30 kann hierbei als Bajonettverschluss und/oder als eine andere, einem Fachmann als sinnvoll erscheinende Kopplungsvorrichtung ausgebildet sein. Ferner weist die tragbare Werkzeugmaschine 28 ein Werkzeugmaschinengehäuse 32 auf, das eine Antriebseinheit 34 und eine Getriebeeinheit 36 der tragbaren Werkzeugmaschine 28 umschließt. Die Antriebseinheit 34 und die Getriebeeinheit 36 sind zur Erzeugung eines auf die Werkzeugmaschinentrennvorrichtung 10 übertragbaren Antriebsmoments auf eine, einem Fachmann bereits bekannte Art und Weise wirkungsmäßig miteinander verbunden. Die Getriebeeinheit 36 ist als Winkelgetriebe ausgebildet. Die Antriebseinheit 34 ist als Elektromotoreinheit ausgebildet. Es ist jedoch auch denkbar, dass die Antriebseinheit 34 und/oder die Getriebeeinheit 36 eine andere, einem Fachmann als sinnvoll erscheinende Ausgestaltung aufweisen. Die Antriebseinheit 34 ist dazu vorgesehen, einen Schneidstrang 12 der Werkzeugmaschinentrennvorrichtung 10 in zumindest einem Betriebszustand mit einer Schnittgeschwindigkeit kleiner als 6 m/s anzutreiben. Hierbei weist die tragbare Werkzeugmaschine 28 zumindest einen Betriebsmodus auf, in dem ein Antrieb des Schneidstrangs 12 in einer Führungseinheit 26 der Werkzeugmaschinentrennvorrichtung 10 entlang einer Schneidrichtung 38 des Schneidstrangs 12 mit einer Schnittgeschwindigkeit kleiner als 6 m/s ermöglicht wird.

Figur 2 zeigt die Werkzeugmaschinentrennvorrichtung 10 in einem von der Kopplungsvorrichtung 30 der tragbaren Werkzeugmaschine 28 entkoppelten Zustand. Die Werkzeugmaschinentrennvorrichtung 10 weist den Schneidstrang 12 auf, der zumindest ein Schneidenträgerelement 14 umfasst. Ferner weist die Werkzeugmaschinentrennvorrichtung 10 die Führungseinheit 26 auf, die zusammen mit dem Schneidstrang 12 ein geschlossenes System bildet. Der Schneidstrang 12 wird mittels der Führungseinheit 26 geführt. Hierzu weist die Führungseinheit 26 zumindest eine Führungsnut auf (hier nicht näher dargestellt). Der Schneidstrang 12 wird mittels die Führungsnut begrenzende Randbereiche der Führungseinheit 26 geführt. Es ist jedoch auch denkbar, dass die Führungseinheit 26 eine anderes, einem Fachmann als sinnvoll erscheinendes Element zur Führung des Schneidstrangs 12 aufweist, wie beispielsweise als rippenartige Anformung an der Führungseinheit 26, die in eine Ausnehmung an dem Schneidstrang 12 eingreift. Der Schneidstrang 12 wird während eines Betriebs umlaufend entlang des Umfangs der Führungseinheit 26 in der Führungsnut bewegt.

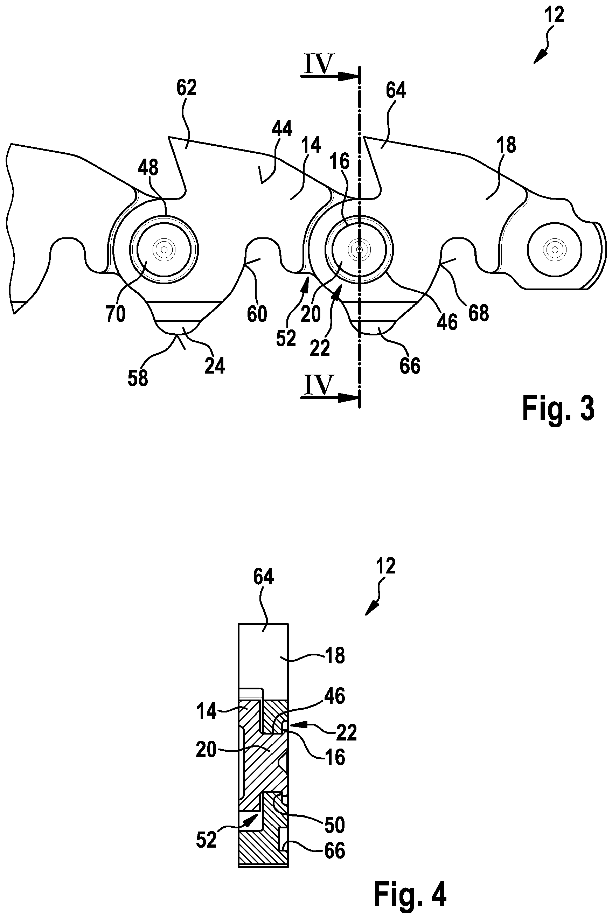

Der Schneidstrang 12 weist ferner zumindest ein Verbindungselement 20 auf, das einstückig mit dem Schneidenträgerelement 14 ausgebildet ist (Figuren 3 und 4). Das Verbindungselement 20 ist bolzenförmig ausgebildet. Hierbei ist das Verbindungselement 20 dazu vorgesehen, mittels eines Zusammenwirkens mit einer Verbindungsausnehmung 46 eines weiteren Schneidenträgerelements 18 des Schneidstrangs 12 eine formschlüssige Verbindung zwischen dem Schneidenträgerelement 14 und dem weiteren Schneidenträgerelement 18 zu realisieren. Das Schneidenträgerelement 14 umfasst ebenfalls eine Verbindungsausnehmung 48, in der zur Bildung des Schneidstrangs 12 ein weiteres Verbindungselement 70 des Schneidstrangs 12 anordenbar ist. Somit umfasst jedes Schneidenträgerelement des Schneidstrangs 12 zumindest ein Verbindungselement und zumindest eine Verbindungsausnehmung. Das Verbindungselement 20 schließt zumindest im Wesentlichen bündig mit zumindest einer Außenfläche 44 des Schneidenträgerelements 14 ab. Es ist jedoch auch denkbar, dass das Verbindungselement 20, betrachtet entlang einer zumindest im Wesentlichen senkrecht zur Außenfläche 44 verlaufenden Richtung, über die Außenfläche 44 hinaussteht. Hierbei kann das Schneidenträgerelement 14 in einem in der Führungsnut angeordneten Zustand über das Verbindungselement 20 an Randbereichen der Führungsnut geführt werden. Somit sind die Schneidenträgerelemente mittels eines Zusammenwirkens der Verbindungselemente und der Verbindungsausnehmungen relativ zueinander schwenkbar gelagert.

Ferner weist das Schneidenträgerelement 14 zumindest ein Quersicherungselement 16 auf, das dazu vorgesehen ist, das Schneidenträgerelement 14 in einem montierten Zustand weitestgehend gegen eine Querbewegung relativ zum weiteren Schneidenträgerelement 18 des Schneidstrangs 12 zu sichern (Figur 4). Das Schneidenträgerelement 14 weist zumindest ein geprägtes Quersicherungselement 16 auf. Das Quersicherungselement 16 ist am Verbindungselement 20 angeordnet. Hierbei weist das Quersicherungselement 16 zumindest einen Sicherungsbereich 22 auf, der sich zumindest im Wesentlichen parallel zu einer Schneidebene des Schneidstrangs 12 erstreckt. Somit erstreckt sich der Sicherungsbereich 22 zumindest im Wesentlichen parallel zur Außenfläche 44 des Schneidenträgerelements 14. Das Quersicherungselement 16 wird nach einer Kopplung von zumindest dem Schneidenträgerelement 14 mit dem weiteren Schneidenträgerelement 18 des Schneidstrangs 12 mittels einer Prägevorrichtung an das Verbindungselement 20 des Schneidstrangs 12 geprägt. Somit wird der Sicherungsbereich 22 infolge des Prägens des Quersicherungselements 16 ausgebildet.

Der Sicherungsbereich 22 ist mittels eines Zusammenwirkens mit einem kreisringnutförmigen Gegensicherungsbereich 50 des weiteren Schneidenträgerelements 18 dazu vorgesehen, das Schneidenträgerelement 14 in einem montierten Zustand in zumindest eine zumindest im Wesentlichen senkrecht zur Außenfläche 44 verlaufende Richtung weitestgehend gegen eine Querbewegung relativ zum weiteren Schneidenträgerelement 18 des Schneidstrangs 12 zu sichern (Figur 4). Des Weiteren wird das Schneidenträgerelement 14 nach einer Verbindung des Verbindungselements 20 und der Verbindungsausnehmung 46 des weiteren Schneidenträgerelements 18 mittels eines Zusammenwirkens eines die Verbindungsausnehmung 46 des weiteren Schneidenträgerelements 18 begrenzenden Randbereichs des weiteren Schneidenträgerelements 18 mit einem das Verbindungselement 20 umgebenden Kopplungsbereich 52 des Schneidenträgerelements 14 in zumindest eine weitere zumindest im Wesentlichen senkrecht zur Außenfläche 44 verlaufende Richtung weitestgehend gegen eine Querbewegung relativ zum weiteren Schneidenträgerelement 18 des Schneidstrangs 12 gesichert. Hierbei umfasst jedes Schneidenträgerelement des Schneidstrangs 12 zumindest ein Quersicherungselement, das mittels eines Prägens nach einer Kopplung mit einem weiteren Schneidenträgerelement an dem Verbindungselement angeordnet ist.

Das Schneidenträgerelement 14 weist des Weiteren zumindest ein Segmentführungselement 24 auf, das dazu vorgesehen ist, eine Bewegung des Schneidenträgerelements 14, in einem in der Führungseinheit 26 angeordneten Zustand in einer von der Führungseinheit abgewandten Richtung betrachtet, zumindest entlang einer zumindest im Wesentlichen parallel zur Schneidebene des Schneidstrangs 12 verlaufenden Richtung zu begrenzen. Das Segmentführungselement 24 wird von einem Querfortsatz gebildet, der sich zumindest im Wesentlichen senkrecht zur Außenfläche 44 des Schneidenträgerelements 14 erstreckt. Hierbei begrenzt das Segmentführungselement 24 eine Längsnut. Das Segmentführungselement 24 ist dazu vorgesehen, zu einer Bewegungsbegrenzung mit an einer dem Schneidenträgerelement 14 zugewandten Innenfläche der Führungseinheit 26 angeordneten Segmentgegenführungselementen 54, 56 der Führungseinheit 26 (Figur 2) zusammenzuwirken. Die Segmentgegenführungselemente 54, 56 sind korrespondierend mit dem Segmentführungselement 24 des Schneidenträgerelements 14 ausgebildet. Das weitere Schneidenträgerelement 18 weist ebenfalls ein Segmentführungselement 66 auf. Somit umfasst jedes Schneidenträgerelement des Schneidstrangs 12 hierbei zumindest ein Segmentführungselement, das dazu vorgesehen ist, eine Bewegung der Schneidenträgerelemente, in einem in der Führungseinheit 26 angeordneten Zustand in einer von der Führungseinheit 26 abgewandten Richtung betrachtet, zumindest entlang einer zumindest im Wesentlichen parallel zur Schneidebene des Schneidstrangs 12 verlaufenden Richtung zu begrenzen.

Zudem weist das Schneidenträgerelement 14 eine Druckkraftübertragungsfläche 58 auf. Die Druckkraftübertragungsfläche 58 ist dazu vorgesehen, Druckkräfte, die bei einer Bearbeitung eines Werkstücks (hier nicht näher dargestellt) auf den Schneidstrang 12 einwirken, mittels eines Zusammenwirkens mit einem Drucckraftaufnahmebereich (hier nicht näher dargestellt) der Führungseinheit 26 abzustützen. Der Druckkraftaufnahmebereich der Führungseinheit 26 ist hierbei, betrachtet entlang einer zumindest im Wesentlichen senkrecht zur Schneidebene des Schneidstrangs 12 verlaufenden Richtung, zwischen zwei zumindest im Wesentlichen parallel zueinander verlaufenden Außenflächen der Führungseinheit 26 angeordnet. Hierbei umfasst jedes Schneidenträgerelement des Schneidstrangs 12 eine Druckkraftübertragungsfläche.

Das Schneidenträgerelement 14 weist ferner eine Antriebsfläche 60 auf, die dazu vorgesehen ist, zu einem Antrieb des Schneidstrangs 12 mit Antriebsflächen eines Drehmomentübertragungselements 40 (Figur 2) der Werkzeugmaschinentrennvorrichtung zusammenzuwirken. Die Antriebsflächen des Drehmomentübertragungselements 40 sind hierbei als Zahnflanken ausgebildet. Die Antriebsfläche 60 des Schneidenträgerelements 14 ist hierbei korrespondierend mit den Antriebsflächen des Drehmomentübertragungselements 40 ausgebildet. Bei einem Antrieb des Schneidstrangs 12 liegen die Zahnflanken des Drehmomentübertragungselements 40 temporär an der Antriebsfläche 60 zu einer Übertragung von Antriebskräften an. Hierbei weist das weitere Schneidenträgerelement 18 ebenfalls eine Antriebsfläche 68 auf. Somit umfasst jedes Schneidenträgerelement des Schneidstrangs 12 eine Antriebsfläche.

Das Drehmomentübertragungselement 40 ist zum Antrieb des Schneidstrangs 12 drehbar in der Führungseinheit 26 gelagert. Das Drehmomentübertragungselement 40 ist in einem gekoppelten Zustand zum Antrieb des Schneidstrangs 12 mit einem Ritzel (hier nicht näher dargestellt) der Antriebseinheit 34 und/oder einem Zahnrad (hier nicht näher dargestellt) und/oder einer verzahnten Welle (hier nicht näher dargestellt) der Getriebeeinheit 36 gekoppelt. Hierbei weist das Drehmomentübertragungselement 40 eine Kopplungsausnehmung 42 auf, die in einem montierten Zustand mit einem Antriebselement der tragbaren Werkzeugmaschine 28 koppelbar ist. Die Kopplungsausnehmung 42 ist konzentrisch im Drehmomentübertragungselement 40 angeordnet. Ferner ist die Kopplungsausnehmung 42 dazu vorgesehen, in einem gekoppelten Zustand des Drehmomentübertragungselements 40 und/oder der Werkzeugmaschinentrennvorrichtung 10 mit dem Ritzel (hier nicht näher dargestellt) der Antriebseinheit 34 und/oder dem Zahnrad (hier nicht näher dargestellt) und/oder der verzahnten Welle (hier nicht näher dargestellt) der Getriebeeinheit 36 gekoppelt zu werden. Die Kopplungsausnehmung 42 ist als Innensechskant ausgebildet. Es ist jedoch auch denkbar, dass die Kopplungsausnehmung 42 eine andere, einem Fachmann als sinnvoll erscheinende Ausgestaltung aufweist. Zudem ist denkbar, dass die Werkzeugmaschinentrennvorrichtung 10 in einer alternativen, hier nicht näher dargestellten Ausgestaltung entkoppelt von dem Drehmomentübertragungselement 40 ausgebildet ist. Hierbei würde das Ritzel (hier nicht näher dargestellt) der Antriebseinheit 34 und/oder dem Zahnrad (hier nicht näher dargestellt) und/oder der verzahnten Welle (hier nicht näher dargestellt) der Getriebeeinheit 36 direkt in die Führungseinheit 26 eingreifen und wäre entkoppelt von einer Zwischenschaltung eines in der Führungseinheit 26 angeordneten Drehmomentübertragungselements zu einem Antrieb des Schneidstrangs 12.

Ferner weist der Schneidstrang 12 zumindest ein Schneidelement 62 auf. Das Schneidelement 62 ist einstückig mit dem Schneidenträgerelement 14 ausgebildet. Das Schneidelement 62 ist dazu vorgesehen, ein Abtrennen und/oder ein Abtragen von Werkstoffteilchen eines zu bearbeitenden Werkstücks (hier nicht näher dargestellt) zu ermöglichen. Das Schneidenträgerelement 14 und das Schneidelement 62 werden hierbei mittels einer Stanzvorrichtung in einem Arbeitsschritt einstückig aus einem Bandmaterial gestanzt. Das weitere Schneidenträgerelement 18 umfasst ebenfalls ein einstückig angeformtes Schneidelement 64. Somit umfasst jedes Schneidenträgerelement des Schneidstrangs 12 ein Schneidelement. Die Schneidelemente 62, 64 können hierbei eine zumindest Titancarbid aufweisende Schneidschicht aufweisen (hier nicht näher dargestellt). Die Schneidschicht wird mittels eines CVD-Verfahrens auf die Schneidelemente 62, 64 aufgebracht. Es ist jedoch auch denkbar, dass die Schneidschicht alternativ oder zusätzlich einen anderen Werkstoff umfasst, wie beispielsweise Titannitrid, Titancarbonitrid, Aluminiumoxid, Titanaluminiumnitrid, Chromnitrid oder Zirkoncarbonitrid. Zudem ist es auch denkbar, dass die Schneidschicht mittels eines anderen, einem Fachmann als sinnvoll erscheinenden Verfahrens aufgebracht wird, wie beispielsweise mittels eines PVD- oder PACVD-Verfahrens. Des Weiteren ist es denkbar, dass die Schneidelemente 62, 64 partikelbestückt ausgebildet sind. Hierbei können die Schneidelemente 62, 64 mit Diamantpartikeln, mit Hartmetallpartikeln oder mit weiteren, einem Fachmann als sinnvoll erscheinenden Partikeln bestückt sein.

## Patentansprüche

1. Werkzeugmaschinentrennvorrichtung, insbesondere Handwerkzeugmaschinentrennvorrichtung, mit zumindest einem Schneidstrang (12), der zumindest ein Schneidenträgerelement (14) und zumindest ein Verbindungselement (20), das einstückig mit dem Schneidenträgerelement (14) ausgebildet ist, umfasst, wobei das Schneidenträgerelement (14) zumindest ein Quersicherungselement (16) aufweist, das dazu vorgesehen ist, das Schneidenträgerelement (14) in einem montierten Zustand weitestgehend gegen eine Querbewegung relativ zu einem weiteren Schneidenträgerelement (18) des Schneidstrangs (12) zu sichern, wobei das Verbindungselement (20) bolzenförmig und zylinderförmig ausgebildet ist, **dadurch gekennzeichnet, dass** das Schneidenträgerelement (14) zumindest ein Segmentführungselement (24) aufweist, das dazu vorgesehen ist, eine Bewegung des Schneidenträgerelements (14), in einem in einer Führungseinheit (26) angeordneten Zustand in einer von der Führungseinheit (26) abgewandten Richtung betrachtet, zumindest entlang einer zumindest im Wesentlichen parallel zu einer Schneidebene des Schneidstrangs (12) verlaufenden Richtung zu begrenzen, wobei das Schneidenträgerelement (14) eine Druckkraftübertragungsfläche (58) aufweist, die dazu vorgesehen ist, Druckkräfte, die bei einer Bearbeitung eines Werkstücks auf den Schneidstrang (12) einwirken, mittels eines Zusammenwirkens mit einem Druckkraftaufnahmebereich der Führungseinheit (26) abzustützen, wobei der Druckkraftaufnahmebereich der Führungseinheit (26), betrachtet entlang einer zumindest im Wesentlichen senkrecht zur Schneidebene des Schneidstrangs (12) verlaufenden Richtung, zwischen zwei zumindest im Wesentlichen parallel zueinander verlaufenden Außenflächen der Führungseinheit (26) angeordnet ist, wobei jedes Schneidenträgerelement (14) des Schneidstrangs (12) eine Druckkraftübertragungsfläche umfasst, wobei das Schneidenträgerelement (14) eine Antriebsfläche (60) aufweist, die dazu vorgesehen ist, zu einem Antrieb des Schneidstrangs (12) mit Antriebsflächen eines Drehmomentübertragungselements (40) der Werkzeugmaschinentrennvorrichtung zusammenwirken.

2. Werkzeugmaschinentrennvorrichtung nach Anspruch 1, **dadurch gekennzeichnet, dass** das Quersicherungselement (16) am Verbindungselement (20) angeordnet ist.

3. Werkzeugmaschinentrennvorrichtung nach einem der vorhergehenden Ansprüche, **dadurch gekennzeichnet, dass** das Quersicherungselement (16) zumindest einen Sicherungsbereich (22) aufweist, der sich zumindest im Wesentlichen parallel zu einer Schneidebene des Schneidstrangs (12) erstreckt.

4. Verfahren zu einer Herstellung zumindest eines Schneidenträgerelements (14) des Schneidstrangs der Werkzeugmaschinentrennvorrichtung nach einem der vorhergehenden Ansprüche, **dadurch gekennzeichnet, dass** das Schneidenträgerelement (14) in einem ersten Schritt des Verfahrens mittels einer Stanzvorrichtung aus einem Bandmaterial gestanzt wird, wobei das Verbindungselement (20) und weitere Funktionsbereiche des Schneidenträgerelements (14) mittels eines Zusammenwirkens einer Matrize und eines Stempels während eines Stanzprozesses an das Schneidenträgerelement (14) angeformt werden, wobei das Quersicherungselement (16) nach einer Kopplung von zumindest dem Schneidenträgerelement (14) mit einem weiteren Schneidenträgerelement (18) des Schneidstrangs (12) mittels einer Prägevorrichtung an ein Verbindungselement (20) des Schneidstrangs (12) geprägt wird.

5. Tragbare Werkzeugmaschine mit einer Werkzeugmaschinentrennvorrichtung nach einem der Ansprüche 1 bis 3 und einer Kopplungsvorrichtung (30) zur formschlüssigen und/oder kraftschlüssigen Kopplung mit der Werkzeugmaschinentrennvorrichtung.

6. Werkzeugmaschinensystem mit der tragbaren Werkzeugmaschine nach Anspruch 5 und mit zumindest der Werkzeugmaschinentrennvorrichtung nach einem der Ansprüche 1 bis 3.

## Claims

1. Power-tool parting device, in particular hand-held power-tool parting device, having at least one cutting strand (12) which comprises at least one blade carrier element (14) and at least one connecting element (20) which is formed in one piece with the blade carrier element (14), wherein the blade carrier element (14) has at least one transverse securing element (16) which is provided to secure the blade carrier element (14), in a mounted state, as far as possible against a transverse movement relative to a further blade carrier element (18) of the cutting strand (12), wherein the connecting element (20) is bolt-shaped and cylinder-shaped in form, **characterized in that** the blade carrier element (14) has at least one segment guide element (24) which is provided to limit a movement of the blade carrier element (14), in a state in which it is arranged in a guide unit (26), as viewed in a direction facing away from the guide unit (26), at least along a direction which extends at least substantially parallel to a cutting plane of the cutting strand (12), wherein the blade carrier element (14) has a compressive-force transmission surface (58) which is provided to support compressive forces, which act on the cutting strand (12) during machining of a workpiece, by means of an interaction with a compressive-force-absorbing region of the guide region (26), wherein the compressive-force-absorbing region of the guide unit (26), as viewed along a direction extending at least substantially perpendicular to the cutting plane of the cutting strand (12), is arranged between two outer surfaces of the guide unit (26) that extend at least substantially parallel to one another, wherein each blade carrier element (14) of the cutting strand (12) comprises a compressive-force transmission surface, wherein the blade carrier element (14) has a drive surface (60) which is provided, for driving the cutting strand (12), to interact with drive surfaces of a torque-transmitting element (40) of the power-tool parting device.

2. Power-tool parting device according to Claim 1, **characterized in that** the transverse securing element (16) is arranged on the connecting element (20) .

3. Power-tool parting device according to either of the preceding claims, **characterized in that** the transverse securing element (16) has at least one securing region (22) which extends at least substantially parallel to a cutting plane of the cutting strand (12).

4. Method for producing at least one blade carrier element (14) of the cutting strand of the machine-tool parting device according to one of the preceding claims, **characterized in that,** in a first step of the method, the blade carrier element (14) is stamped from a strip material by means of a stamping device, wherein the connecting element (20) and further functional regions of the blade carrier element (14) are formed onto the blade carrier element (14) by means of an interaction of a die and of a punch during a stamping process, wherein, after coupling at least the blade carrier element (14) to a further blade carrier element (18) of the cutting strand (12), the transverse securing element (16) is embossed onto a connecting element (20) of the cutting strand (12) by means of an embossing device.

5. Portable power tool having a power-tool parting device according to one of Claims 1 to 3 and a coupling device (30) for form-fitting and/or force-fitting coupling to the power-tool parting device.

6. Power-tool system having the portable power tool according to Claim 5 and having at least the power-tool parting device according to one of Claims 1 to 3.

## Revendications

1. Dispositif de séparation pour machine-outil, en particulier dispositif de séparation pour machine-outil manuel, avec au moins un brin de coupe (12) comprenant au moins un élément porte-lame (14) et au moins un élément de liaison (20) réalisé d'un seul tenant avec l'élément porte-lame (14), dans lequel l'élément porte-lame (14) présente au moins un élément de blocage transversal (16) prévu pour bloquer l'élément porte-lame (14) à l'état monté dans la mesure du possible contre tout mouvement transversal par rapport à un autre élément porte-lame (18) du brin de coupe (12), dans lequel l'élément de liaison (20) est réalisé sous forme de boulon et de manière cylindrique, **caractérisé en ce que** l'élément porte-lame (14) présente au moins un élément de guidage de segment (24) prévu pour limiter un mouvement de l'élément porte-lame (14) dans un état disposé dans une unité de guidage (26), vue dans une direction détournée de l'unité de guidage (26), au moins dans une direction s'étendant au moins substantiellement en parallèle à un plan de coupe du brin de coupe (12), dans lequel l'élément porte-lame (14) présente une surface de transmission de force de compression (58) prévue pour soutenir des forces de pression agissant sur le brin de coupe (12) lors de l'usinage d'une pièce à travailler au moyen d'une coopération avec une zone d'absorption de force de compression de l'unité de guidage (26), dans lequel la zone d'absorption de force de compression de l'unité de guidage (26), vue dans une direction s'étendant au moins substantiellement perpendiculairement au plan de coupe du brin de coupe (12), est disposée entre deux surfaces extérieures de l'unité de guidage (26) s'étendant au moins substantiellement en parallèle l'une à l'autre, dans lequel chaque élément porte-lame (14) du brin de coupe (12) comprend une surface de transmission de force de compression, dans lequel l'élément porte-lame (14) présente une surface d'entraînement (60) prévue pour coopérer avec des surfaces d'entraînement d'un élément de transmission de couple (40) du dispositif de séparation pour machine-outil, en vue d'entraîner le brin de coupe (12).

2. Dispositif de séparation pour machine-outil selon la revendication 1, **caractérisé en ce que** l'élément de blocage transversal (16) est disposé sur l'élément de liaison (20).

3. Dispositif de séparation pour machine-outil selon l'une quelconque des revendications précédentes, **caractérisé en ce que** l'élément de blocage transversal (16) présente au moins une zone de blocage (22) s'étendant au moins substantiellement en parallèle à un plan de coupe du brin de coupe (12).

4. Procédé de fabrication d'au moins un élément porte-lame (14) du brin de coupe du dispositif de séparation pour machine-outil selon l'une quelconque des revendications précédentes, **caractérisé en ce que** dans une première étape du procédé, l'élément porte-lame (14) est découpé dans un feuillard au moyen d'un dispositif de découpage, dans lequel l'élément de liaison (20) et d'autres zones fonctionnelles de l'élément porte-lame (14) sont rapportés à l'élément porte-lame (14) au moyen d'une coopération d'une matrice de découpage et d'un poinçon pendant un processus de découpage, dans lequel l'élément de blocage transversal (16), après un couplage d'au moins l'élément porte-lame (14) à un autre élément porte-lame (18) du brin de coupe (12), est estampé au moyen d'un dispositif d'estampage sur un élément de liaison (20) du brin de coupe (12).

5. Machine-outil portable avec un dispositif de séparation pour machine-outil selon l'une quelconque des revendications 1 à 3 et un dispositif de couplage (30) pour un couplage au dispositif de séparation pour machine-outil par complémentarité de forme et/ou par adhérence.

6. Système de machine-outil avec la machine-outil portable selon la revendication 5 et avec au moins le dispositif de séparation pour machine-outil selon l'une quelconque des revendications 1 à 3.
